Europäisches Patentamt

European Patent Office

Office européen des brevets

(11) Publication number: **0 197 789 B1**

# EUROPEAN PATENT SPECIFICATION

(45) Date of publication of patent specification: **20.03.91**

(51) Int. Cl.⁵: **C08L 67/02,** C08K 5/29,
//(C08L67/02,79:00,9:00,51:00,
67:00,75:04,77:00)

(21) Application number: **86302578.9**

(22) Date of filing: **08.04.86**

(54) Polyester composition.

(30) Priority: **10.04.85 JP 75945/85**

(43) Date of publication of application:
**15.10.86 Bulletin 86/42**

(45) Publication of the grant of the patent:
**20.03.91 Bulletin 91/12**

(84) Designated Contracting States:
**BE DE FR GB IT NL**

(56) References cited:
**EP-A- 0 072 917**
**EP-A- 0 157 635**
**FR-A- 1 576 704**
**FR-A- 2 268 838**

(73) Proprietor: **POLYPLASTICS CO. LTD.**
**30 Azuchimachi 2-chome**
**Higashi-ku Osaka-shi(JP)**

(72) Inventor: **Takahashi, Katsuhiko**
**324, Miyashita**
**Fuji-shi Shizuoka(JP)**
Inventor: **Nakatsuji, Hiroshi**
**91-19, Miyashita**
**Fuji-shi Shizuoka(JP)**
Inventor: **Okuda, Hiroshi**
**885-11, Miyajima**
**Fuji-shi Shizuoka(JP)**

(74) Representative: **Livsey, Gilbert Charlesworth**
**Norris et al**
**HYDE, HEIDE & O'DONNELL 10-12 Priests**
**Bridge**
**London SW15 5JE(GB)**

## Description

The present invention relates to thermoplastic polyester resin compositions having good low-temperature impact characteristics, improved thermal stability, and improved resistance to hot water and water vapor; and more particularly the invention relates to polyalkylene terephthalate resin compositions.

The resin composition of the present invention is suitable for use in molding onto exterior parts, engine-room parts, electrical equipment parts, and electronic parts, for example, and also in molding parts used in construction and other fields of activity, more particularly parts which are likely to be exposed to a low temperature atmosphere.

Thermoplastic polyester resins, such as for example polyalkylene terephthalate resins, are widely used as engineering plastics in various industrial fields, being recognized as having excellent mechanical and physical properties. Indeed, a large number of resin compositions have hitherto been provided which are claimed as having improved properties to meet various characteristic requirements placed on such resins in the individual industrial fields.

While thermoplastic polyester resin compositions have some degree of impact characteristic and thermal stability, however, there may arise a problem in respect of impact strength, if a part molded of such composition has high notch sensitivity and noticeably sharp rib or ribs.

In such case, a conventional approach is to add a thermoplastic elastomer in order to reduce the notch sensitivity. Among varieties of such elastomer conventionally used are thermoplastic rubbers, e.g., a graft copolymer such that various vinyl compounds are grafted by using butadiene rubber as a rubber component, and a polyacrylate resin wherein a modifier composed of such resin is a polystage polymer having a rubber-like first stage and a thermoplastic rigid final stage, polyolefins modified by block- or graft-copolymerization, and/or ethylene-propylene rubber.

However, addition of such thermoplastic elastomer may considerably improve the impact resistance in a room temperature atmosphere, but will result in consider able decrease in the impact strength in such low-temperature atmosphere as -40° C. In such case, an elastomer having good low-temperature characteristics is added in a large quantity; however, this will cause considerable deterioration in rigidity and other mechanical characteristics, with the result that the composition no longer deserves the name of engineering plastic.

Another difficulty with the prior-art compositions improved in such way concerns thermal stability. That is, during its short-time detention in molten state in a molding machine, such composition will suffer from deterioration in its physical properties because thermal decomposition will occur with the thermoplastic polyester resin itself and also with the thermoplastic elastomer, furthermore, by the action of the thermoplastic elastomer added, recohesion takes place under the molten condition, with the result cf considerable decrease in impact resistance.

As a counter-measure in such case, normal practice is to polymeric-plasticize the thermoplastic polyester resin to be used, such as polyalkylene terephthalate resin, and/or to use a stabilizer; such practice will have some measure of effect for retention of the static strength characteristics, e.g., tensile strengh, but have almost no effect for retention of the dynamic strength characteristics, with which the present invention is concerned, such as impact resistance, for example.

In the invention described and claimed in our EP-B1-157635A a polyester composition having improved resistance to hot water and steam is provided by including in the polyester defined proportions of an ethylene/alkyl acrylate copolymer and an epoxy resin having at least two epoxy groups in the molecule.

The present inventors endeavored to seek a solution to aforesaid problems from the standpoint of modifying the interface between the thermoplastic resin component, such as polyalkylene terephthalate resin, and the thermoplastic elastomer component in a thermoplastic polyester composition, and also of inhibiting possible molecular weight loss due to thermal decomposition in the thermoplastic polyester resin, and as a result they arrived at this invention,

Accordingly, the present invention provides a thermoplastic polyester composition which comprises a polyester, (A) 1 to 50% by weight (based on the weight of the polyester) of a thermoplastic elastomer which is a copolymer of butadiene, styrene and methyl methacrylate and (B) 0.1 to 10% by weight (based on the weight of the polyester) of a polycarbodiimide. The low-temperature impact characteristics and molten-state thermal stability of the thermoplastic resin have thus been greatly improved.

Thermoplastic resins useful for the purpose of the invention are aromatic polyesters, each composed principally of aromatic dicarbodylic acid and diol, or composed of oxycarboxylic acid. Examples of aromatic dicarboxylic acid are bifunctional carboxylic acids, such as terephthalic acid, isophthalic acid, 2-methyl terephthalic acid, 4-methyl terephthalic acid, naphthalene dicarboxylic acid, and diphenyl dicarboxylic acid; one or more kinds of them may be used. More particularly, terephthalic acid is preferred.

Examples of diols are aliphatic glycols, such as ethylene glycol, propylene glycol, trimethylene glycol, tetramethylene glycol, and neopentyl glycol; one or more kinds of these may be used. More particularly, ethylene glycol and tetramethylene glycol are preferred. Also aromatic dihydroxy compounds, such as -2,2-bis(4-hydroxyphenyl) propane, may be used.

Examples of oxycarboxylic acids are oxybenzoic acid and oxynaphthoic acid.

Particular preferred thermoplastic polyester resins are polyalkylene terephthalate resins, such as polyethylene terephthalate, polytetramethylene terephthalate, and copolymers or mixtures of these; as is well known, these polyester resins are obtainable through polycondensation of terephthalic acid or lower alkyl ester thereof and alkylene diol. For example, polyethylene terephthalate or polybutylene terephthalate is produced by polycondensing dimethyl terephthalate and ethylene glycol or 1,4-butane diol after an ester interchange reaction.

In addition, the polyester may be a thermoplastic fully aromatic polyester resin composed of one or more kinds of aromatic hydroxy carboxylic acid, and its copolymers or mixtures with any of aforesaid thermoplastic polyester resins.

The thermoplastic elastomer component (A) is a copolymer of the kind in which the rubber component is a copolymer of butadiene, with which styrene and methyl methacrylate are copolymerised.

The elastomers (A) may be added to the thermoplastic polyester resin in a range of addition of 1 - 50% by weight. If the addition is below this range, improvement in impact resistance can hardly be obtained. If the addition is above this range, it may bring undesirable effects on such other properties as strength and rigidity, for example. A preferred range of addition is 5 - 30 wt %.

Available for use as component (B) according to the invention, that is as the polycarbodiimide compound, are any polycarbodiimides derived from monomers having two or more isocynate groups.

For example, the following may be mentioned as such: poly (hexamethylene dicarbodiimide), poly (cyclohexylene dicarbodiimide), poly (tolylcarbodiimide), poly (3,3'-dimethyl-4,4'-biphenylmethane carbodiimide), poly (p-phenylene carbodiimide), poly (m-phenylene carbodiimide), poly (3,3'-dimethyl-4,4'-diphenylmethane carbodiimide), and mixtures of these. Preferred polycarbodiimides are poly (tolylcarbodiimide), poly (4,4'-dipheylmethane carbodiimide), and mixtures of these.

One or more kinds of such carbodiimide compounds may be added to the thermoplastic polyester resin.

There is no particular limitation on the degree of polymerization, and all types of such compounds, from oligomer type to high polymer type, may be equally used.

The addition range for the polycarbodiimide compounds is 0.1 - 10 wt %. If the addition is below this range, no sufficient effect can be expected for modification of the interface between the elastomer and the polyester resin such as polyalkylene terephthalate, or for inhibition of the deterioration due to heat of the polyalkylene terephthalate or the like. If the addition is excessive, a tridimensional change of the resin is accelerated and the fluidity thereof is reduced. More preferably, the addition should be 0.5 - 5 wt %.

The components (A) and (B) used for the composition of the invention is preferably of such microfine particle size as 5 $\mu$m or finer from the view point of dispersibility into the polymer.

If the component (A) for the composition of the invention is added alone, it may serve for improvement in impact resistance at room temperature and in heat resistance, and also for tensile strength retention, but there may be only a slight improvement in impact resistance at such low temperature as -40°C. If the component (B) only is added, it may serve for tensile strength retention under such conditions as short-time detention in the molding machine, but no perceivable effect can be obtained in respect of impact resistance.

However, by using the components (A) and (B) in combination in accordance with the present invention, surprisingly remarkable effect can be obtained: a notched Izod impact strength at -40°C which is almost equal to that at room temperature, and no decrease whatever in impact resistance even if the composition is retained in molten state in the molding machine for a long time, e.g., 30 min. Such synergistic effect cannot be anticipated by the prior art.

In order to impart to the composition of the invention further desired characteristics according to the purpose for which it is used, it is possible to incorporate thereinto one or more kinds of known additives, such as lubricant, nucleating agent, parting agent, antistatic agent, other surface active agent, plasticizer, flame retardant, flame retarding assistant, pigment, dye, heat stabilizer, and ultraviolet stabilizer.

In order to give still further desired characteristics to the composition of the invention, it is also possible to mix or copolymerize therewith one or more kinds of organic polymer materials. Examples of such polymer materials are polycarbonate, low molecular weight polyethylene, polypropylen,e polyurethane, and fluoroplastic.

Further, it is possible to add, to the extent not much detrimental to the effect of the invention, one or more kinds of other known reinforcing fillers including inorganic fibers, such as glass fiber, carbon fiber, graphite fiber, metallic fiber, silicon carbide fiber, asbestos, wollastonite, and fibrous potassium titanate; fibrous reinforcing fillers, such as whisker and various organic fibers; lamellar reinforcing fillers, such as lamellar glass (glass flake), talc, and metallic foil; and particulate additives, such as calcium carbonate, quartz powder, silica, magnesium carbonate, calcium sulfate, clay, diatomaceous earth, alumina, silica sand, glass powder, graphite, and glass bead.

The composition of the invention may be easily prepared according to any known method employed generally in preparing the conventional type of resin composition. For example, one method is such that the individual components are mixed, the mixture is then kneaded and extruded into pellets by employing an extruder, and subsequently, the pellets are molded into shape; another method is that pellets of different compositions are first prepared, and the pellets are mixed in specified proportions, the mixture being then molded into shape, so that a part of the desired composition is obtained after molding; and a further method is that one or more of the components are charged directly into the molding machine.

[Examples and Comparative Examples]

The invention will now be further explained with reference to the following examples and comparative examples; it is to be understood, however, that the invention is not limited by these examples.

Examples 1-7; Comparative Examples 1-4

To a polybutylene terephthalate having an inherent viscosity of 1.0 were added a butadiene-styrene-methyl methacrylate copolymer or a thermoplastic segment-type copolyester (duPont, "Hytrel 4056®) as component (A) thermoplastic elastomer, and poly (4,4'-diphenylmethane carbodiimide) as component (B) polycarbodiimide, in such proportions as shown in Table 1, and a pellet-form composition was prepared from the mixture by employing a double screw extruder. Then, from the pellet an ASTM impact test piece (3,2 mm thick) was molded by an injection molding machine set at a cylinder temperature of 250°C.

Test pieces molded according to conventional molding cycle (injection time 20 sec + cooling time 10 sec) were identified as test pieces with detention of 0 min in the molding machine. Test pieces were again molded after being retained in the molding machine for 30 min. Comparison was made in respect of heat stability.

Low-temperature impact strength tests were made at ordinary temperature (23°C x 65% RH) and in accordance with ASTM D-638 Method after the test pieces are allowed to stand for 20 min in an atomsphere of -40°C.

Evaluation for modulus in flexure was made in accordance with ASTM D-790 Method after the test pieces were allowed to stand at 23°C and 65% RH for 24 hours.

The evaluation results are shown in Table 1.

For the purpose of comparison, test pieces in which either (A) or (B) was omitted and those in which the both components were omitted were evaluated in same manner as in Examples, and the evaluation results are also shown in Table 1 under comparative example columns.

Table 1

| | Composition/Property | Unit/Test method | Examples | | | | | | | Comparative Examples | | | |
|---|---|---|---|---|---|---|---|---|---|---|---|---|---|
| | | | 1 | 2 | 3 | 4 | 5 | 6 | 7 | 1 | 2 | 3 | 4 |
| Composition | • Polybutylene terephthalate | wt % | 78 | 85 | 88 | 73 | 83 | 79 | 78 | 100 | 80 | 98 | 75 |
| | • Thermoplastic elastomer | | | | | | | | | | | | |
| |    I  *1) | " | 20 | 10 | 10 | 20 | 15 | 20 | | | 20 | | 20 |
| |    II  *2) | " | | | | | 5 | | 20 | | | | 5 |
| | • Polycarbodiimide | " | 2 | 5 | 2 | 2 | 2 | 1 | 2 | | | | |
| Property | • Izod impact strength | ASTM D-638 | | | | | | | | | | | |
| | Detention Test time in / condition molder | Kg mm mm/cm cm | | | | | | | | | | | |
| |   0 min   23°C | | 92.6 | 70.0 | 60.3 | 93.4 | 75.0 | 91.3 | 83.3 | .4.8 | 61.2 | 5.0 | 87.9 |
| |          −40°C | | 29.7 | 22.1 | 18.0 | 49.6 | 25.2 | 29.0 | 27.1 | 1.5 | 7.1 | 4.6 | 28.0 |
| |   30 min   23°C | | 83.6 | 70.0 | 20.0 | 93.0 | 40.2 | 60.4 | 51 | 3.6 | 6.6 | 4.0 | 27.9 |
| | • Modulus in flexure | ASTM D-790 kg/cm² MPa | 16,000 1,570 | 21.000 2,060 | 21,000 2,060 | 13,600 1,330 | 18,500 1,815 | 16,500 1,620 | 15,500 1,520 | 26,000 2,550 | 16,000 1,570 | 26,000 2,550 | 139,000 13,640 |

*1) Butadiene-styrene-methyl methacrylate copolymer

*2) Thermoplastic segment-type copolyester

According to the invention, a thermoplastic polyester compound is provided which has high impact resistance in a low-temperature atmosphere and good stability in molten state, a factor critical particularly in the case of large-sized part molding.

The thermoplastic polyester resin composition, more particularly polyalkylene terephthalate resin composition, according to the invention exhibits good performance in those fields in which high impact resistance is required under severer conditions, such as auto exterior parts, electrical equipment parts, and electronic parts, and also in construction fields, more particularly those areas in which thermal stability at the time of large part molding is required, such areas having not been considered as markets for polyalkylene terephthalate resins.

In these areas, metals have hitherto been used, and considerable restrictive conditions have necessarily been imposed for the use of plastics. However, by using the composition of the invention, such problems can be overcome, and therefore, the economical advantage of the present invention is exceedingly great.

## Claims

1. A polyester composition which comprises a polyester, (A) 1 to 50% by weight (based on the weight of the polyester) of a thermoplastic elastomer which is a copolymer of butadiene, styrene and methyl methacrylate and (B) 0.1 to 10% by weight (based on the weight of the polyester) of a polycarbodiimide.

2. A polyester composition as claimed in claim 1, in which the polyester is polytetramethylene terephthalate.

3. A polyester composition as claimed in claim 1 or claim 2, in which the proportion of the elastomer (A) is 5 to 30% by weight (based on the weight of the polyester).

4. A polyester composition as claimed in any preceding claim, in which the proportion of the polycarbodiimide (B) is 0.5 to 5% by weight (based on the weight of the polyester).

5. A polyester composition as claimed in any preceding claim, in which the additives (A) and (B) have an average particle size of 5 $\mu$m or smaller.

## Revendications

1. Une composition de polyester qui comprend un polyester, (A) 1 à 50 % en poids (par rapport au poids du polyester) d'un élastomère thermoplastique qui est un copolymère de butadiène, styrène et méthacrylate de méthyle, et (B) 0,1 à 10 % en poids (par rapport au poids du polyester) d'un polycarbodiimide.

2. Une composition de polyester telle que revendiquée dans la revendication 1, dans laquelle le polyester est un polytéréphtalate de tétraméthylène.

3. Une composition de polyester telle que revendiquée dans la revendication 1 ou la revendication 2, dans laquelle la proportion de l'élastomère (A) est de 5 à 30 % en poids (par rapport au poids du polyester).

4. Une composition de polyester telle que revendiquée dans l'une quelconque des revendications précédentes, dans laquelle la proportion du polycarbodiimide (B) est de 0,5 à 5 % en poids (par rapport au poids du polyester).

5. Une composition de polyester telle que revendiquée dans l'une quelconque des revendications précédentes, dans laquelle les additifs (A) et (B) ont une taille moyenne de particules de 5 $\mu$m ou moins.

## Ansprüche

1. Polyester-Zusammensetzung, umfassend einen Polyester,
   (A) 1 bis 50 Gew.-% (bezogen auf das Gewicht des Polyesters) eines thermoplastischen Elastomers, das ein Copolymer aus Butadien, Styrol und Methylmethacrylat ist, und
   (B) 0,1 bis 10 Gew.-% (bezogen auf das Gewicht des Polyesters) eines Polycarbodiimids.

2. Polyester-Zusammensetzung nach Anspruch 1, worin der Polyester Polytetramethylenterephthalat ist.

3. Polyester-Zusammensetzung nach Anspruch 1 oder Anspruch 2, worin der Anteil des Elastomers (A) 5 bis 30 Gew.-% (bezogen auf das Gewicht des Polyesters) beträgt.

4. Polyester-Zusammensetzung nach irgendeinem vorhergehenden Anspruch, worin der Anteil des Polycarbodiimids (B) 0,5 bis 5 Gew.-% (bezogen auf das Gewicht des Polyesters) beträgt.

5.  Polyester-Zusammensetzung nach irgendeinem vorhergehenden Anspruch, worin die Additive (A) und (B) eine mittlere Teilchengröße von 5 μm oder weniger haben.